# EUROPEAN PATENT APPLICATION

(11) **EP 2 628 920 A2**
(43) Date of publication of application: **21.08.2013**
(21) Application number: 13154943.8
(22) Date of filing: 12.02.2013
(51) Int. Cl.: F02C 7/224

(54) **Fuel heating system for power plant**

(30) Priority: 14.02.2012 US 201213372618
(71) Applicant: General Electric Company, Schenectady, New York 12345 (US)
(72) Inventor: Nenmeni, Vijay Raghavendran, Atlanta, GA 30339 (US); Sackellares, John Dennis, Atlanta, GA 30339 (US); Wang, Renhua, Atlanta, GA 30339 (US)
(74) Representative: Cleary, Fidelma

(57) **Abstract**

A fuel heating system (10) for a power plant includes a fuel source for a gas turbine system (12), wherein the fuel source contains a fuel at a first temperature. Also included is a feedwater source (15) for distributing a feedwater. Further included is a fuel heater (14) configured to receive the fuel at the first temperature and distribute the fuel to the gas turbine system (12) at a second temperature and capable of receiving the feedwater from the feedwater source (15). Yet further included is at least one boiler drum (18) for containing a boiler substance. Also included is at least one heat exchanger (26,28) for receiving the feedwater and the boiler substance and distributing the feedwater to the fuel heater (14) and the boiler substance to a blowdown system.

## Description

### BACKGROUND OF THE INVENTION

The subject matter disclosed herein relates to power plants, and more particularly to a system and method of heating fuel within power plants.

Typical gas turbine combined cycle systems often include one or more heating sources for multiple operations, including startup procedures. During the starting process, a fuel gas supply is heated to meet fuel gas minimum superheat temperature requirements by a heater, thereby allowing operation of the gas turbine at only low load conditions. While the fuel gas heater is at adequate temperature to provide the fuel when the plant is loaded and operating normally, it has been observed that during startup, the heat source is often at lower enthalpy conditions. Thus, during startup, the fuel gas performance heater is not adequate to provide fuel gas at a suitable temperature until the heater is supplemented with additional heating sources or the plant bottom cycle warms up. Such an arrangement results in delayed loading and wasted fuel due to the delay.

### BRIEF DESCRIPTION OF THE INVENTION

According to one aspect of the invention, a fuel heating system for a power plant includes a fuel source for a gas turbine system, wherein the fuel source contains a fuel at a first temperature. Also included is a feedwater source for distributing a feedwater. Further included is a fuel heater configured to receive the fuel at the first temperature and distribute the fuel to the gas turbine system at a second temperature and capable of receiving the feedwater from the feedwater source. Yet further included is at least one boiler drum for containing a boiler substance. Also included is at least one heat exchanger for receiving the feedwater and the boiler substance and distributing the feedwater and the boiler substance to the fuel heater.

According to another aspect of the invention, a fuel heating system for a power plant includes a fuel source for a gas turbine system, wherein the fuel source contains a fuel at a first temperature. Also included is an economizer for distributing a feedwater. Further included is a fuel heater configured to receive the fuel and the feedwater and capable of distributing the fuel to the gas turbine system. Yet further included is at least one boiler drum for containing a boiler substance. Also included is at least one heat exchanger for receiving the fuel and the boiler substance and distributing the fuel and the boiler substance to the fuel heater.

According to yet another aspect of the invention, a method of heating fuel in a power plant includes supplying a fuel to a fuel heater for heating prior to distribution to a gas turbine system. Also included is extracting a boiler substance from at least one boiler drum and distributing the boiler substance to at least one heat exchanger. Further included is supplying feedwater from an economizer to the at least one heat exchanger for mixing with the boiler substance. Yet further included is heating the feedwater in the at least one heat exchanger. Also included is distributing the feedwater to the fuel heater.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a schematic illustration of a first embodiment of a fuel heating system for a power plant;
FIG. 2 is a schematic illustration of a second embodiment of the fuel heating system for the power plant;
FIG. 3 is a schematic illustration of a third embodiment of the fuel heating system for the power plant; and
FIG. 4 is a schematic illustration of a fourth embodiment of the fuel heating system for the power plant.

The detailed description explains embodiments of the invention, together with advantages and features, by way of example with reference to the drawings.

### DETAILED DESCRIPTION OF THE INVENTION

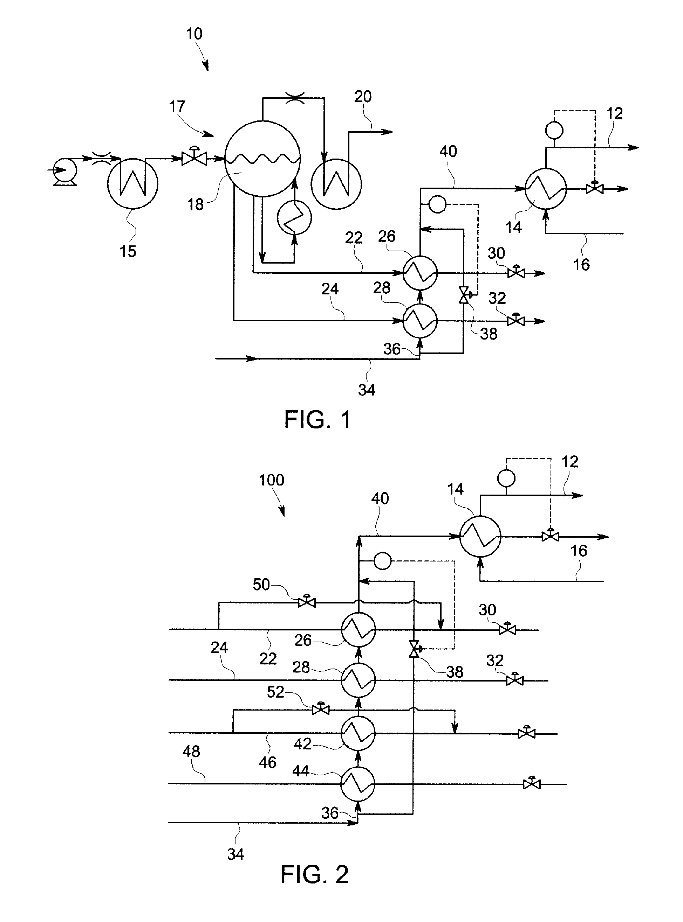

Referring to FIG. 1, in one exemplary embodiment, a fuel heating system for a power plant is generally referred to as 10. The power plant comprises a gas turbine system, which is not illustrated, but the direction of which is referenced by 12. The fuel heating system 10 is configured to heat a fuel prior to distribution of the fuel to the gas turbine system 10 for combustion purposes within the gas turbine system 12. Within the fuel heating system 10, the fuel is initially delivered from a fuel source to a fuel heater 14 along a fuel line 16.

The fuel heating system 10 generally includes a boiler system 17 that comprises at least one boiler drum 18 that contains a boiler substance, such as steam or water. In a multiple boiler drum system, a common arrangement is to have a low pressure boiler drum, an intermediate pressure boiler drum and a high pressure boiler drum, where the respective pressures within each of the plurality of boiler drums 18 are relative to one another. The at least one boiler drum 18 is typically used in conjunction with a steam turbine, whereby superheated steam is distributed along path 20 to the steam turbine for operation therein. Each of the at least one boiler drums 18 employ "blowdowns" to maintain steam chemistry and typically consists of startup blowdown for startup chemistry purposes, intermittent blowdowns that are used intermittently during startup and normal operation depending on chemistry buildup, and continuous blowdowns that operate continuously to remove any solids buildup and to maintain other chemistry related parameters on a continuous basis. Intermittent blowdown is sent along an intermittent blowdown line 22, while a continuous blowdown line 24 transports continuous blowdown. The intermittent blowdown line 22 and the continuous blowdown line 24 lead to and through at least one heat exchanger, and in the illustrated embodiment the intermittent blowdown line 22 leads to a first heat exchanger 26, while the continuous blowdown line 24 leads to a second heat exchanger 28. The intermittent blowdown line 22 and the continuous blowdown line 24 each lead to blowdown tank(s), with a first control valve 30 controlling flow and state characteristics of the intermittent blowdown line 22 and a second control valve 32 controlling flow and state characteristics of the continuous blowdown line 24. Although the description above and the illustrated embodiment refer to multiple heat exchangers 26, 28, it is contemplated that both the intermittent blowdown line 22 and the continuous blowdown line 24 lead to a single heat exchanger.

The illustrated embodiment shown in FIG. 1 relates to blowdown generated by a high pressure boiler drum, but it is to be appreciated that the blowdown employed in the fuel heating system 10 may be that of another boiler drum, specifically an intermediate pressure boiler drum, for example. The flow conditions associated with blowdown generated by the high pressure boiler drum and the low pressure boiler drum may vary based on the application of use. Illustrative flow condition ranges for the high pressure boiler drum include a temperature of approximately 500°F-600°F, a pressure of approximately 700-1,500 psia, and a flow rate of approximately 15,000-70,000 lbm/hr. The flow condition ranges for the intermediate pressure boiler drum include a temperature of approximately 375°F-450°F, a pressure of approximately 200-400 psia, and a flow rate of approximately 5,000-15,000 lbm/hr. The aforementioned ranges are merely presented for illustrative purposes and it is to be appreciated that temperatures, pressures and flow rates outside of the illustrative ranges may be generated by the at least one boiler drum 18 and may still be suitable for use in the fuel heating system 10. Irrespective of the boiler drum 18 employed, the fuel heating system 10 utilizes feedwater discharged from a feedwater source, such as an intermediate pressure economizer 15, to inject directly or indirectly into the fuel heater 14 to accelerate the heating process of the gas that is to be delivered to the gas turbine system 12. It is to be appreciated that the economizer 15 is merely one example of the feedwater source and various alternatives may be employed to supply the feedwater. The feedwater is directed along a feedwater path 34 toward a junction 36 that selectively permits the feedwater to bypass the first heat exchanger 26 and the second heat exchanger 28. The feedwater path 34 is controlled by a third control valve 38 that determines whether the feedwater flows through or bypasses the first heat exchanger 26 and the second heat exchanger 28. Regardless of whether the feedwater flows through or bypasses the first heat exchanger 26 and the second heat exchanger 28, the feedwater is routed along a heated feedwater line 40 to the fuel heater 14.

In operation, during startup the third control valve 38 is closed and the feedwater passes through the first heat exchanger 26 and the second heat exchanger 28. The heat exchangers 26, 28 pre-heat the feedwater prior to feedwater distribution to the fuel heater 14, thereby accelerating the fuel heating process prior to distribution to the gas turbine system 12. Upon reaching a suitable temperature proximate the fuel heater 14, the third control valve 38 is opened, thereby allowing the feedwater to bypass the first heat exchanger 26 and the second heat exchanger 28. This process provides temperature control of the feedwater along heated feedwater line 40.

Referring now to FIG. 2, another exemplary embodiment of the fuel heating system 100 is illustrated. The fuel heating system 100 is similar to fuel heating system 10, with the exception of the addition of a third heat exchanger 42 and a fourth heat exchanger 44, which are operably connected to an intermediate pressure intermittent blowdown line 46 and an intermediate pressure continuous blowdown line 48, respectively. Both the intermittent blowdown line 22 and the intermediate pressure intermittent blowdown line 46 are configured to selectively bypass the first heat exchanger 26 and the third heat exchanger 42, respectively. A fourth control valve 50 and a fifth control valve 52 control whether throughflow or bypass is performed. Such control permits the bypass option when the flow rate is not required for fuel heating.

The fuel heating system 100 employs multiple boiler drums 18, such as the high pressure boiler drum and the intermediate pressure boiler drum, for example. Similar to fuel heating system 10, intermittent blowdown and continuous blowdown from each of the boiler drums 18 is utilized to pass through the heat exchangers 26, 28, 42, 44.

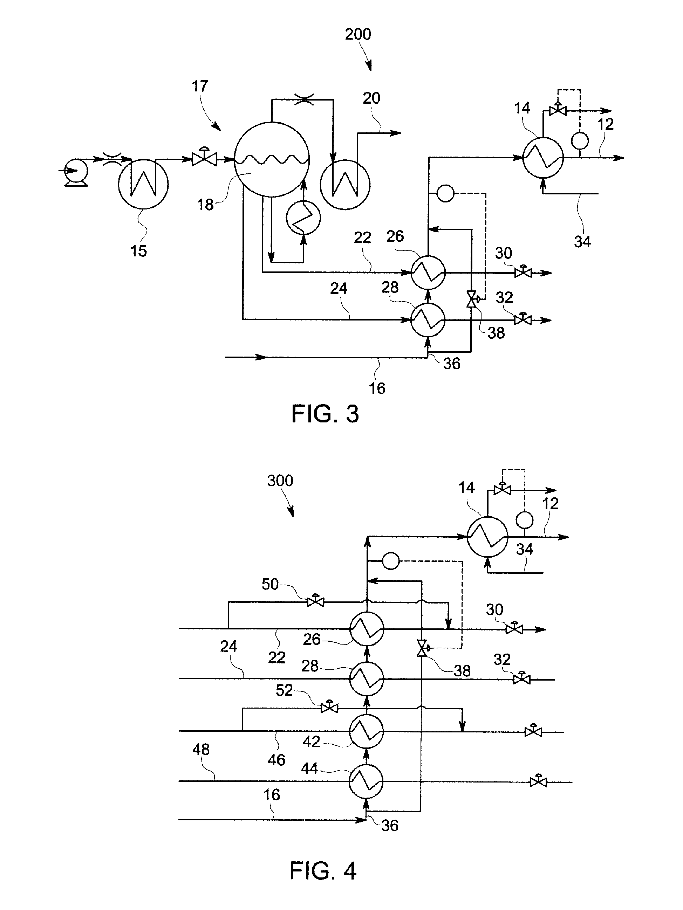

Referring now to FIG. 3, another exemplary embodiment of a fuel heating system 200 is illustrated. Fuel heating system 200 is of a configuration similar to fuel heating system 10, with the notable exception that the feedwater is directly fed into the fuel heater 14 via the feedwater path 34, while the fuel line 16 is arranged to feed fuel through the first heat exchanger 26 and the second heat exchanger 28. The fuel line 16 is configured to bypass the first heat exchanger 26 and the second heat exchanger 28 with the selective control of the third control valve 38. The fuel heating system 200 provides selective pre-heating of the fuel prior to entry into the fuel heater 14.

Referring now to FIG. 4, yet another exemplary embodiment of a fuel heating system 300 is illustrated. The fuel heating system 300 is similar to fuel heating system 200, with respect to the pre-heating of the fuel prior to entry to the fuel heater 14, but combines aspects of fuel system 100. As shown, fuel system 300 employs the third heat exchanger 42 and the fourth heat exchanger 44, while also combining intermittent and continuous blowdown from multiple boiler drums 18, such as the high pressure boiler drum and the intermediate pressure drum.

Advantageously, the fuel heating systems 10, 100, 200, 300 reduce fuel heating time required during a startup sequence. The fuel heater 14 is provided with increased heat input, thereby providing a more rapid and efficient startup of the power plant. Furthermore, a reduction in fuel consumption and emissions is achieved during startup by reducing or eliminating high emissions hold time for the gas turbine system 12. Additionally, otherwise wasted heat from the blowdown process is reclaimed, which improves efficiency, even during steady-state operation. Additionally, fuel temperature is increased achieving higher fuel gas temperature and associated higher thermodynamic efficiency.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A fuel heating system (10) for a power plant comprising:
a fuel source for a gas turbine system (12), wherein the fuel source contains a fuel at a first temperature;
a feedwater source (15) for distributing a feedwater;
a fuel heater (14) configured to receive the fuel at the first temperature and distribute the fuel to the gas turbine system at a second temperature and capable of receiving the feedwater from the feedwater source;
at least one boiler drum (18) for containing a boiler substance; and
at least one heat exchanger (26,28) for receiving the feedwater and the boiler substance and distributing the feedwater and the boiler substance to the fuel heater (14).

2. The fuel heating system of claim 1, wherein the at least one boiler drum (18) is a first boiler drum for containing the boiler substance at a high pressure.

3. The fuel heating system of claim 1 or 2, wherein the at least one boiler drum (18) is a second boiler drum for containing the boiler substance at an intermediate pressure.

4. The fuel heating system of any of claims 1 to 3, further comprising a plurality of heat exchangers, wherein the feedwater source is an economizer (15).

5. The fuel heating system of any preceding claim, further comprising a first heat exchanger (26) and a second heat exchanger (28).

6. The fuel heating system of claim 5, when dependent on claims 2 and 3, wherein the first heat exchanger is configured to receive the first boiler substance at the high pressure and the second heat exchanger (28) is configured to receive the second boiler substance at the intermediate pressure.

7. The fuel heating system of claim 6, wherein the first pressure is greater than the second pressure.

8. The fuel heating system of any preceding claim, further comprising at least one valve (30,32) for controllably bypassing the at least one heat exchanger (26,28) with the feedwater.

9. A method of heating fuel in a power plant comprising:
supplying a fuel to a fuel heater (14) for heating prior to distribution to a gas turbine system (12);
extracting a boiler substance from at least one boiler drum (18) and distributing the boiler substance to at least one heat exchanger (26,28);
supplying feedwater from an economizer (15) to the at least one heat exchanger (26,28) for mixing with the boiler substance;
heating the feedwater in the at least one heat exchanger (26,28); and
distributing the feedwater to the fuel heater (14).

10. The method of heating fuel of claim 9, further comprising:
monitoring a temperature reading of the fuel proximate a point of entry to the gas turbine system (10); and
controlling at least one valve (30,32) in response to the temperature reading, wherein the at least one valve ((30,32) controls a flow path (34) and a flow rate of the feedwater.

11. The method of heating fuel of claim 9 or 10, further comprising selectively extracting the boiler substance from a first boiler drum (18) having a first pressure and a second boiler drum (18) having a second pressure.
